# DEMANDE DE BREVET EUROPEEN

(11) **EP 0 955 705 A1**
(43) Date de publication de la demande: **10.11.1999**
(21) Numéro de dépôt: 99401015.5
(22) Date de dépôt: 26.04.1999
(51) Int. Cl.: H01S 3/06

(54) **Amplificateur et procédé d'amplification d'un signal optique**

(30) Priorité: 07.05.1998 FR 9805831
(71) Demandeur: ALCATEL, 75008 Paris (FR)
(72) Inventeur: Bayart, Dominique, 92140 Clamart (FR); Desthieux, Bertrand, 75014 Paris (FR)
(74) Mandataire: Lamoureux, Bernard

(57) **Abrégé**

Pour amplifier un signal optique on réalise un amplificateur comportant une fibre optique du type fluoré, mais dopée à l'erbium et co-dopée à l'ytterbium. Pour éviter alors les phénomènes d'émission stimulée due à la forte durée de vie des atomes d'erbium dans l'état excité contenu dans ce type de fibres, on excite la fibre avec une source laser dont la longueur d'onde est comprise dans une gamme correspondant à une transition d'énergie de l'atome co-dopant. Cette longueur d'onde est cependant extérieure à une gamme d'énergie de l'atome d'erbium. Les deux gammes d'énergie coopèrent. On montre qu'en agissant ainsi, on évite le problème de désexcitation stimulée tout en s'affranchissant de la lenteur relative de la transition des atomes d'erbium de l'état excité I11/2 à l'état excité I13/2.

## Description

La présente invention a pour objet un amplificateur et un procédé d'amplification d'un signal optique utilisable essentiellement dans le domaine de la transmission sur fibre optique. Le but de l'invention est de réaliser des amplificateurs à fibre optique dont la platitude du gain est mieux maîtrisée.

On connaît essentiellement, sur le plan industriel, deux types de fibre optique utilisables pour opérer une amplification.

Un premier type dit "fibre en verre de silice" comporte un coeur en silice dopée à l'erbium qui, dans un exemple, a un diamètre de 5 micromètres. Le dopage est normalement effectué sur un barreau épais, avant étirage de la fibre, selon un procédé dit MCVD de dépôt en phase vapeur. Ce coeur est entouré d'une première et d'une seconde gaine, elles aussi en silice, qui dans un exemple ont toutes les deux après étirage une épaisseur de 62,5 micromètres. La fabrication de telles fibres est obtenue par étirage, au travers d'un orifice, d'une préforme chauffée. Dans la préforme, les trois couches de matériaux sont présentes mais avec des épaisseurs homothétiquement plus épaisses.

On connaît un autre type de fibre, dit "fibre fluorée". Ces fibres fluorées comportent pour leur fabrication, une préforme dans laquelle on réalise un mélange, dans un exemple préféré, de fluorures de Zirconium, de Baryum, de Lantanium, d'Aluminium et de Sodium. Ces fibres fluorées sont aussi dites "ZBLAN" du nom de leurs constituants. Le dopage en erbium dans ce dernier cas peut être effectué au niveau du mélange lui-même.

Les comportements de ces fibres silice ou fluorées dopées, au moment de l'amplification, sont différents. En effet, leurs platitudes de gain en fonction de la longueur d'onde (ou de la fréquence) des signaux optiques à amplifier sont différentes. Typiquement, entre les longueurs d'onde les plus favorisées et les longueurs d'onde les moins favorisées, sur une plage d'environ 30 nm, les amplifications dans une fibre silice subissent des écarts de 15% du gain, alors que cet écart n'est que de 4% dans le cas des fibres ZBLAN. Le fait d'avoir une favorisation de certaines longueurs d'onde (notamment les longueurs d'onde centrales) présente un inconvénient si des amplificateurs réalisés selon cette technologie sont installés dans des réseaux de fibres optiques à longue distance. En effet, de tels amplificateurs utilisés comme répéteurs successifs finissent alors par provoquer un excès d'amplification des fréquences centrales au détriment des fréquences latérales. Il faut alors corriger par un filtrage cet excès de favorisation. On cherche donc à utiliser les fibres ZBLAN pour limiter cette favorisation gênante puisque le gain est plus plat dans la bande.

Les fibres silice et ZBLAN présentent par ailleurs un comportement différent en ce qui concerne un effet non radiatif dû aux phonons acoustiques. En effet, du fait de la nature du matériau de la fibre, entre deux niveaux particuliers d'énergie d'excitation des atomes d'erbium d'une fibre silice, on peut trouver des phonons émissibles dont l'énergie est un sous multiple, de rang faible (typiquement 2, 3 ou 4), de la différence d'énergie entre ces deux niveaux particuliers. Ceci conduit à avoir une probabilité élevée que de tels phonons acoustiques puissent se développer dans le matériau de la fibre silice. Par contre, en ce qui concerne les fibres du type ZBLAN, le sous-multiple est de rang beaucoup plus élevé. Dans ces conditions, la probabilité pour que ce type de phonons s'y développe est beaucoup plus faible. Ceci a pour conséquence que la population d'un niveau d'énergie se dépeuple, par effet non radiatif, beaucoup plus rapidement dans le cas d'une fibre silice que dans le cas d'une fibre ZBLAN. La durée de vie des atomes à l'état excité est donc plus faible dans le cas des fibres silice que dans le cas des fibres fluorées. On va montrer dans ce qui suit les conséquences néfastes qui peuvent se produire à cause de cette durée de vie allongée.

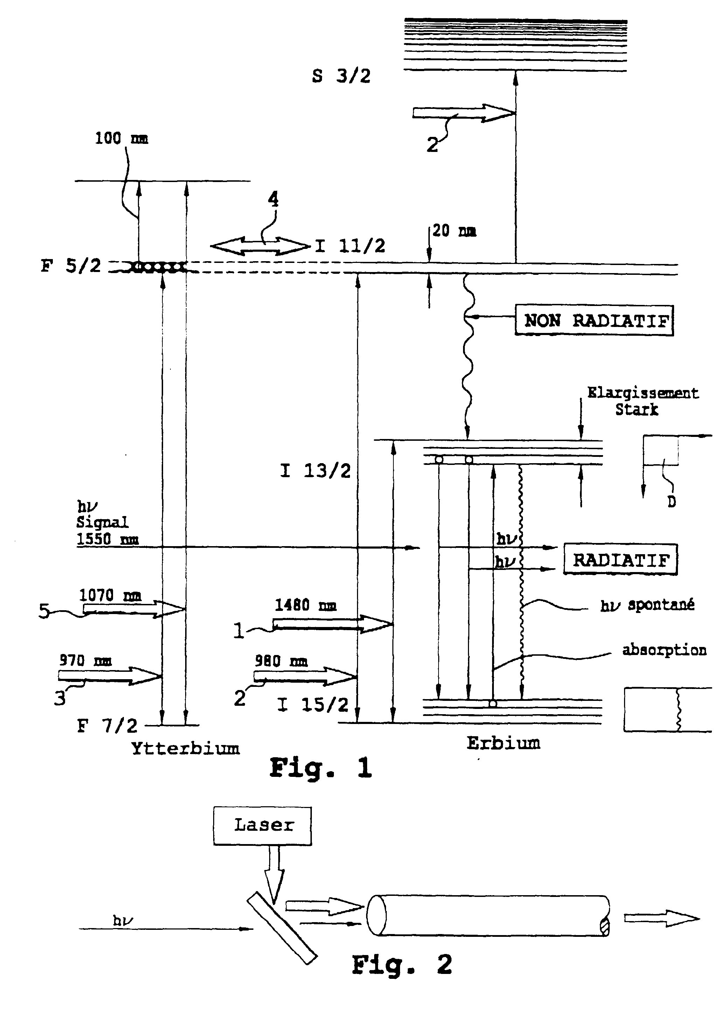

La figure 1 annexée, montre à la fois pour l'état de la technique et pour l'invention, et à la fois pour les fibres silice et les fibres ZBLAN, le phénomène global de l'amplification avec ses contraintes et ses limitations. Très schématiquement, au cours d'un pompage 1, avec une source laser émettant un rayonnement à 1480 nm de longueur d'onde, un photon laser produit par la source laser vient exciter les électrons de la couche fondamentale I15/2 de certains atomes d'erbium pour les faire rejoindre la couche d'énergie I13/2. Dans ces conditions, un photon de signal hν, dont la longueur d'onde utile est dans un exemple préféré comprise dans une bande de l'ordre de 1530 nm à 1630 nm, vient désexciter les électrons de la couche I13/2 pour produire, par effet radiatif, des photons hν à la même fréquence, mais en nombre plus élevé. Ces photons de signal hν eux-mêmes peuvent désexciter plus loin dans la fibre optique d'autres électrons de la couche I13/2 de sorte que le phénomène d'amplification recherché peut atteindre des gains élevés (par exemple 25 dB). Dans un exemple arbitraire le signal hν a une longueur d'onde de 1550 nm.

Malheureusement, les photons de signal hν peuvent aussi agir comme un pompage, et transférer eux aussi des atomes d'erbium d'un état d'excitation de la couche I15/2 à la couche I13/2. Ce phénomène est un phénomène d'absorption ionique qui dégrade le facteur de bruit de l'amplificateur. Pour éviter ce phénomène d'absorption ionique, il convient d'organiser une inversion totale de population entre les couches I15/2 et I13/2, il convient de faire en sorte qu'il n'y ait plus d'atomes d'erbium à l'état fondamental I15/2. On comprend aisément que si le pompage a eu pour effet de faire disparaître tous les électrons de la couche I15/2, il ne pourra pas y avoir d'absorption ionique.

En outre certains atomes excités retombent aléatoirement à l'état désexcité en produisant un signal hν spontané. L'inconvénient de ce signal hν spontané est qu'il n'est pas du tout lié au signal à amplifier. Ce signal hν spontané, ainsi que l'absorption ionique, contribuent donc d'une part à augmenter le bruit, et d'autre part à réduire le signal utile. Le phénomène le plus néfaste est néanmoins le peuplement de la couche I15/2 qui lui-même engendre l'absorption ionique.

On a montré au niveau I13/2, d'une manière symbolique, l'élargissement Stark. Cet élargissement montre la dégénérescence d'énergie de ce niveau d'énergie. En pratique, en pompant des atomes à 1480 nm, les atomes d'erbium excités à l'état I13/2 se répartissent, du fait de la statistique de Boltzmann, sur toutes les couches dégénérées de ce niveau I13/2. Pour simplifier, on crée des atomes excités avec un niveau d'énergie 1480 nm par rapport à l'état fondamental, alors qu'on va utiliser des atomes excités au niveau 1550 nm. Ceci se produit facilement puisque, selon la statistique de Boltzmann, le niveau à 1550 nm se repeuple automatiquement à partir du niveau à 1480 nm. La figure 1 montre par un diagramme D que la répartition de population du type e^{hω/kT2π} est en fait sensiblement constante au niveau I13/2.

Enfin, le problème du pompage à 1480 nm est qu'il donne lieu à une émission stimulée. En effet, le signal de pompage lui-même est vu comme un signal à amplifier et donne lieu à la désexcitation de certains atomes excités au niveau I13/2. Ceci à trois conséquences, deux sans inconvénients et une néfaste. Premièrement, le fait que les atomes se désexcitent produit des photons à 1480, qui eux-mêmes peuvent servir à exciter d'autres photons. Deuxièmement, les signaux propagés à 1480 nm ne sont pas gênants. Ils ne viennent pas perturber le rapport signal sur bruit puisqu'ils sont situés hors bande utile : 1530-1630 nm.

Par contre, cette désexcitation stimulée a pour inconvénient de repeupler le niveau d'énergie I15/2 avec les inconvénients d'absorption ionique vus ci-dessus.

Pour éviter ce phénomène, au lieu de pomper à 1480 nm, on pompe à 980 nm avec une excitation 2 produite par une source laser. Cette excitation à 980 nm a pour effet de faire passer des électrons des atomes d'erbium de l'état fondamental de la couche I15/2 à l'état d'excitation de la couche I11/2. Puis par effet non radiatif, du fait de l'influence des phonons, la couche I11/2 se dépeuple au profit de la couche I13/2 qui se peuple. La couche I13/2 ne peut plus alors être dépeuplée par émission stimulée puisque la gamme de fréquence est désadaptée. La longueur d'onde de 980 nm ne correspond plus à la longueur d'onde de désexcitation des atomes pour passer de la couche I13/2 à la couche I15/2. On réalise dans ce cas, une inversion de population parfaite (ou presque parfaite) entre la couche I15/2 et la couche I13/2.

C'est là qu'apparaît le comportement fondamentalement différent entre les fibres silice et les fibres ZBLAN. Dans les fibres silice, du fait de la probabilité élevée de disposer de phonons non radiatifs de désexcitation du niveau I11/2 au niveau I13/2, la durée de vie des atomes excités à l'état I11/2 est faible. On peut considérer qu'ils retombent immédiatement à l'état I13/2 où, pendant leur durée de vie (même faible) on en profite pour provoquer l'amplification utile.

Donc ce principe fonctionne bien pour les fibres silice, en simplifiant, parce que le niveau I11/2 est vidé avant qu'un autre photon à 980 nm ne vienne le faire retourner à l'état fondamental.

Par contre, en ce qui concerne les fibres de type ZBLAN, parce que l'énergie des phonons est plus petite et parce que leur statistique est moins favorable, la désexcitation entre le niveau I11/2 et le niveau I13/2 est moins rapide. La durée de vie des atomes d'erbium excités au niveau I11/2 est grande. Le taux de désexcitation non radiatif est alors insuffisant pour dépeupler rapidement le niveau I11/2. De ce fait, le niveau I11/2 dans les fibres ZBLAN se dépeuple sous l'effet du pompage laser par émission stimulée pour venir repeupler le niveau fondamental I15/2 (ce qui va contribuer à provoquer l'effet d'absorption ionique néfaste). Ou bien, en s'excitant encore plus, les atomes d'erbium excités dans l'état I11/2 vont peupler le niveau d'énergie S3/2 (ou un niveau supérieur) à partir duquel d'ailleurs, il y a un continuum du niveau d'énergie. De ce fait, beaucoup d'atomes excités à l'état I11/2 se retrouvent excités supplémentairement par le signal de pompage à 980 nm pour atteindre le niveau S 3/2. Ces atomes sont alors perdus pour l'amplification et le rendement de l'amplificateur n'est pas bon.

En résumé, le pompage à 980 nm fonctionne bien dans les fibres silice du fait de la forte efficacité de l'effet non radiatif dans ces fibres. Par contre, le gain avec ces fibres n'est pas plat. A l'opposé, ce processus ne fonctionne pas bien avec les fibres ZBLAN pour lesquelles par contre, le gain est plat.

La figure 1 montre également une autre manière connue de pomper l'énergie dans les atomes d'erbium d'une fibre silice. Pour cela, on utilise un co-dopage à l'ytterbium. La fibre optique possède alors des atomes des deux dopants finement mélangés. On peut alors pomper par une excitation 3, avec un laser dont la longueur d'onde est comprise entre 970 nm et 990 nm, de manière à venir peupler le niveau F5/2 de l'ytterbium à partir du niveau fondamental F7/2 de cet atome. Quelle que soit la longueur d'onde de pompage, les atomes d'ytterbium se répartissent, là aussi du fait de la statistique de Boltzmann, dans un élargissement Stark de l'atome d'ytterbium au niveau F7/2 dont la largeur est typiquement de 100 nm. Par un effet coopératif 4, les atomes d'ytterbium cèdent alors leur énergie à des atomes d'erbium, de sorte que les couches F5/2 de l'ytterbium et I11/2 de l'erbium soient peuplés de manière équivalente. Cet effet coopératif n'a pas les mêmes conséquences que l'excitation 2 car l'échange d'énergie ne se propage pas.

Cette solution de co-dopage est très intéressante parce que la couche I11/2 de l'erbium a un élargissement Stark faible, typiquement de 20 nm, et qu'il est délicat de régler le pompage à une longueur d'onde qui correspond exactement à la différence de niveau d'énergie I15/2 - I11/2 pour l'atome d'erbium. Cette technique de co-dopage permet donc de relâcher la contrainte sur la longueur d'onde de pompage.

Avec les fibres de type ZBLAN, malgré leurs avantages, cette dernière technique ne peut pas être mieux utilisée du fait que les atomes de la couche I11/2 de l'erbium ne se désexcitent pas assez vite en niveau I13/2. De fait cette technique n'y est pas utilisée.

L'invention a pour objet de remédier à cet inconvénient, c'est à dire de permettre l'emploi effectif d'une fibre de type ZBLAN parce que cette fibre présente à l'amplification un gain plus plat que les fibres silice, sans avoir à supporter les effets néfastes du repeuplement de la couche I15/2 à partir de la couche I11/2.

Dans l'invention, pour éviter que le peuplement d'atomes excités au niveau I11/2, ne se transforme en des atomes excités aux niveaux I15/2, ou S3/2 ou supérieurs (atomes neutralisés pour l'amplification), on préconise de sélectionner dans les longueurs d'onde de pompage (typiquement comprises entre 970 et 1070 nm) celles pour lesquelles les transitions vers des niveaux d'énergie I15/2, S3/2 ou autres sont interdites, c'est à dire pour lesquelles aucun niveau d'énergie d'accueil n'existe. Par exemple, la longueur d'onde de pompage sera nettement différente de 980 nm. Typiquement, on pourra utiliser des lasers très puissants, notamment le laser dits "Yag" dont la longueur d'onde d'émission est de 1064 nm.

L'invention a donc pour objet un procédé d'amplification d'un signal optique dans lequel on excite une fibre optique du type fluorée dopée à l'erbium avec un rayonnement laser, caractérisé en ce que
- on dope la fibre avec un co-dopant, et
- on excite la fibre avec un rayonnement dont la longueur d'onde correspond à une transition de niveaux d'énergie du co-dopant tout en étant extérieure à une gamme, dite interdite, de transitions de niveaux d'énergie de l'erbium.

L'invention a également pour objet un amplificateur optique comportant une fibre optique du type fluorée dopée à l'erbium et une source de rayonnement laser, caractérisé en ce qu'il comporte un co-dopant dans la fibre et une longueur d'onde du rayonnement laser qui correspond à une transition de niveaux d'énergie du co-dopant tout en étant extérieure à une gamme, dite interdite, de transitions de niveaux d'énergie de l'atome d'erbium.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : la représentation déjà partiellement commentée de la répartition des niveaux d'énergie et des moyens d'exciter les atomes pour produire une meilleure amplification,
- Figure 2 : une représentation schématique du mode général de l'amplification dans lequel une excitation lumineuse, produite par une source laser, vient exciter le matériau d'une fibre optique de concert avec un signal optique hν à y amplifier.

Il est connu par le document "Low-noise and gain flattened fluoride based Er3+ doped fibre amplifier pumped by 970 nm laser diode" dû à M. YAMADA et Al et publié dans Electronics Letters du 24 avril 1997 volume 33, n° 9, pages 809 et 810, d'obtenir un amplificateur pour des fibres de type ZBLAN fluorées qui combine les performances de bruit des fibres silice et la platitude du gain de ces fibres de type ZBLAN fluorées. Cet amplificateur hybride comporte un premier étage contenant une fibre de silice pompée à 980 nm. Ce premier étage est suivi d'un second étage avec une fibre fluorée pompée à 1480 nm. Cette solution n'est pas suffisamment performante car elle nécessite, en une réalisation coûteuse, d'utiliser deux fibres dopées de natures différentes et que l'effet de la caractéristique de bruit du deuxième étage sur la caractéristique de bruit de l'amplificateur total ne peut pas être complètement masqué par les caractéristiques du premier étage.

L'idée de l'invention est, au contraire, premièrement d'additionner un co-dopant dans une fibre du type ZBLAN qui permette de changer la nature des niveaux d'énergie dans la fibre. L'ion ytterbium Yb3+ est de ce point de vue un bon co-dopant car son spectre d'absorption comporte à l'état fondamental une longueur d'onde centrale, proche de 980 nm, mais avec une largeur de bande spectrale assez large pour autoriser des longueurs d'onde de pompage aussi hautes que 1064 nm, celle du laser Yag. L'ion ytterbium présente ainsi de bonnes possibilités de population par effet coopératif du niveau I11/2 de l'atome d'erbium par transfert d'énergie du niveau F5/2 de l'ion ytterbium Yb3+.

Selon l'invention, deuxièmement, on sélectionne une longueur d'onde d'un pompage 5 qui est extérieure au spectre d'absorption du niveau I11/2 de l'atome d'erbium. Ce spectre d'absorption, qui fait partie de la gamme interdite selon l'invention, est marqué par des croix sur la figure 1. De ce fait, l'atome d'erbium ne pourra pas être désexcité par l'énergie à la longueur d'onde de pompage pour retourner à l'état fondamental. Ceci va avoir pour effet de favoriser la constitution d'une inversion de population favorable à l'amplification. Par effet radiatif et non-radiatif, le niveau I13/2 de l'atome d'erbium va être peuplé à son tour à partir du niveau I11/2 de cet atome. La durée de vie des atomes d'erbium au niveau I11/2 ne va pas être raccourcie, mais, du fait qu'il n'y a pas de longueur d'onde de pompage de désexcitation qui lui corresponde, le repeuplement du niveau I15/2 n'est pas organisé.

Il est par ailleurs décrit dans le document "Up-conversion Luminescence in Er3+ and Yb3+ doped fluorozirconate Glasses" dû à l.A. GRISHIN et Al., publié dans la revue Optical Fiber Technology 1, 331-334 (1995), l'étude d'une fibre ZBLAN dopée à l'ytterbium. Cependant, ce document invite à pomper la fibre avec une longueur d'onde plus faible de 540-590 nm de manière, en définitive, à peupler le niveau I13/2 de l'atome d'erbium par effet radiatif à partir d'atomes excités dans l'état S3/2, voire supérieur.

On a pu mesurer dans l'invention que ce rendement n'est pas bon au final. A l'opposé, avec le procédé de l'invention, on obtient en augmentant la longueur d'onde un facteur de bruit amélioré de 1 dB (20%) par rapport au facteur de bruit des amplificateurs classiques à fibres du type ZBLAN. Ceci permet alors d'utiliser de tels amplificateurs car on peut rallonger de 20% la distance entre répéteurs sur des liaisons de fibres optiques à longue distance. Ce qui en conséquence rend ces liaisons moins chères.

En pratique, la longueur d'onde de pompage préférée a été de 1064 nm mais elle pourrait être une longueur d'onde quelconque comprise entre 950 nm et 1070 nm, à condition d'éviter la partie de la gamme interdite à cet endroit qui est de 970 nm à 990 nm. On cherche par ailleurs à imposer que, du fait du continuum ou du quasi-continuum de niveaux d'énergie au dessus du niveau S3/2, la longueur d'onde d'excitation soit extérieure aux longueurs d'onde correspondant à des énergies de transition de l'atome d'erbium, de son niveau d'énergie I11/2 vers ses niveaux S3/2 ou supérieurs. Ce but pourra être facilement atteint en utilisant par exemple une source laser titane-saphir dont la longueur d'onde caractéristique est de 1020 nm, mais qui peut être réglée entre 950 nm et 1 100 nm.

En ce qui concerne la nature du dopage et du co-dopage, les proportions d'erbium et d'ytterbium ont été respectivement dans une réalisation préférée de 500 ppm (parties par million) et de 15000 ppm, soit un rapport préféré de 30. La proportion d'ytterbium peut par ailleurs être comprise entre 10000 ppm et 50000 ppm.

## Revendications

1. Procédé d'amplification d'un signal optique dans lequel on excite une fibre optique du type fluorée dopée à l'erbium avec un rayonnement laser, caractérisé en ce que
- on dope la fibre avec un co-dopant (Yb), et
- on excite la fibre avec un rayonnement dont la longueur d'onde correspond à une transition de niveaux d'énergie du co-dopant tout en étant extérieure à une gamme, dite interdite, de transitions de niveaux d'énergie de l'erbium.

2. Procédé selon la revendication 1, caractérisé en ce que le co-dopant est formé d'atomes d'ytterbium et que la transition de niveau d'énergie du co-dopant correspond à la transition du niveau d'énergie F7/2 au niveau d'énergie F5/2 de cet atome.

3. Procédé selon l'une des revendications 1 à 2, caractérisé en ce que la gamme des longueurs d'onde interdites correspond à celle des bandes d'énergie de transition de l'atome d'erbium, de son niveau d'énergie I11/2 vers son niveau d'énergie I15/2.

4. Procédé selon l'une des revendications 1 à 3, caractérisé en ce que on excite la fibre avec un rayonnement dont la longueur d'onde est extérieure à celles correspondant à des bandes d'énergie de transition de l'atome d'erbium, de son niveau d'énergie I11/2 vers son niveau d'énergie S3/2 ou vers des niveaux supérieurs.

5. Amplificateur optique comportant une fibre optique du type fluorée (ZBLAN) dopée à l'erbium et une source de rayonnement laser, caractérisé en ce qu'il comporte un co-dopant (Yb) dans la fibre et une longueur d'onde (1064nm) du rayonnement laser qui correspond à une transition de niveaux d'énergie du co-dopant tout en étant extérieure à une gamme (980 nm), dite interdite, de transitions de niveaux d'énergie de l'atome d'erbium.

6. Amplificateur selon la revendication 5, caractérisé en ce que le co-dopant est de l'ytterbium avec une concentration de 15000 ppm.

7. Amplificateur selon l'une des revendications 5 ou 6, caractérisé en ce que le co-dopant est de l'ytterbium avec une concentration relative de 30 par rapport à la concentration de l'erbium

8. Amplificateur selon l'une des revendications 5 à 7, caractérisé en ce que la fibre fluorée est du type ZBLAN.

9. Amplificateur selon l'une des revendications 5 à 8, caractérisé en ce que le laser est un laser YAG.
